# EUROPÄISCHE PATENTSCHRIFT

(11) **EP 0 503 381 B1**
(45) Veröffentlichungstag und Bekanntmachung des Hinweises auf die Patenterteilung: **21.06.1995**
(21) Anmeldenummer: 92103326.2
(22) Anmeldetag: 27.02.1992
(51) Int. Cl.: D21G 1/02, F16C 13/00

(54) **Durchbiegungssteuerbare und beheizbare Walze**
Heatable controlled deflection roll
Rouleau à réglage de la flexion chauffable

(30) Priorität: 08.03.1991 DE 4107440
(43) Veröffentlichungstag der Anmeldung: 16.09.1992
(73) Patentinhaber: Voith Sulzer Finishing GmbH, 47803 Krefeld (DE)
(72) Erfinder: Wenzel, Reinhard, Dipl.-Ing., W-4150 Krefeld (DE); Hermsen, Thomas, Dipl.-Ing., W-4174 Issum 2 (DE); van Haag, Rolf, Dipl.-Ing., W-4173 Kerken 2 (DE)
(74) Vertreter: Knoblauch, Ulrich, Dr.-Ing.

(56) Entgegenhaltungen:
- EP-A- 0 179 730
- EP-A- 0 340 503
- EP-A- 0 405 083
- DE-A- 3 526 283
- GB-A- 2 226 101

## Beschreibung

Die Erfindung bezieht sich auf eine durchbiegungssteuerbare und beheizbare Walze für Kalander u.dgl., nach dem Oberbegriff des Anspruchs 1.

Eine solche Walze ist aus DE-PS 35 26 283 bekannt. Das Arbeitsöl ist heiß, um eine intensive Beheizung des Walzenmantels zu bewirken. Das Randöl ist demgegenüber kühl, so daß es beim Durchfluß durch das Wälzlager seine Schmierfähigkeit behält. Die ringförmige Trennvorrichtung trennt die beiden Öle voneinander. Sie können daher ihre Heiz-Funktion einerseits und Schmierfunktion andererseits unbeeinträchtigt voneinander ausüben.

Bei einer anderen durchbiegungssteuerbaren und beheizbaren Walze, wie sie aus EP-OS 179 730 bekannt ist, erstreckt sich der Walzenmantel im wesentlichen nur über die Arbeitszone. Die Randzone befindet sich innerhalb stirnseitig an den Walzenmantel angesetzter Buchsen. Hier sind die Trennvorrichtungen durchlässig, so daß das Randöl in einer zwischen Arbeitszone und Randzone befindlichen Kammer eine Wärmeisolierung, die eine zu starke Beheizung der Wälzlager verhindern soll, bildet.

Der Erfindung liegt die Aufgabe zugrunde, Mittel anzugeben, mit denen es möglich ist, ein gewünschtes Temperaturprofil, insbesondere ein konstantes Temperaturprofil über die gesamte genutzte Arbeitsbreite der Walze aufrechtzuerhalten.

Diese Aufgabe wird erfindungsgemäß gelöst durch die Merkmale des kennzeichnenden Teils des Anspruchs 1.

Dieser Vorschlag beruht auf der Erkenntnis, daß bei jeder Walze Randeinflüsse einen ganz erheblichen Einfluß auf die Temperatur der Arbeitsfläche haben. Hierbei nimmt vielfach die Temperatur zum Rand hin nicht etwa ab, wie man annehmen müßte, weil die Randzonen unbeheizt sind. Vielmehr steigt die Temperatur in aller Regel zum Rand hin an und zwar umso mehr, je heißer das Arbeitsöl ist, weil in den Randbereichen keine Wärmeabfuhr durch die zu behandelnde Bahn erfolgt. Dies gilt vor allem für Bahnen, die Feuchtigkeitsanteile enthalten und daher auch aufgrund einer teilweisen Verdampfung Wärme abführen. Der Randabschnitt höherer Temperatur der Arbeitsfläche hat wegen der Temperaturausdehnung auch einen größeren Durchmesser. Das Bahnmaterial wird daher an seinem Rand nicht nur thermisch, sondern auch mechanisch stärker beansprucht als erwünscht.

Erfindungsgemäß kann der Volumenstrom des Randöls geändert werden. Durch eine Erhöhung des Volumenstroms vermag das Randöl mehr Wärme aus dem Randbereich der Arbeitsfläche abzuführen und dadurch das Temperaturprofil zu vergleichmäßigen. Es entfällt dann sowohl die zu hohe Temperaturbeanspruchung als auch die sich infolge der Durchmesservergrößerung ergebende zu hohe mechanische Beanspruchung. Selbstverständlich kann auch durch eine Verminderung des Volumenstroms eine Temperaturabsenkung im Randbereich der Arbeitsfläche kompensiert werden. Eine Änderung der Einstellung ist auch möglich, um unterschiedliche Eigenschaften, z.B. Feuchtigkeitsgehalt, der Bahnmaterialien oder unterschiedliche Breiten der Bahnen zu berücksichtigen. In allen Fällen kann der Randeinfluß weitgehend kompensiert werden.

Empfehlenswert ist es, daß dem Walzenmantel im Bereich der Randzone ein Temperaturfühler zugeordnet ist und die Einstellvorrichtung in Abhängigkeit von der gemessenen Temperatur verstellbar ist. Auf diese Weise kann ein gewünschtes Temperaturprofil auch am Rand aufrechterhalten werden. Die Verstellung kann von Hand im Wege einer Steuerung oder automatisch mit Hilfe eines Regelkreises erfolgen.

Die Einstellvorrichtung kann unterschiedliche Formen annehmen. Sie kann eine in die Zulaufleitung oder in die Ablaufleitung des Randöls geschaltetes Ventil sein. Es kann sich um eine regelbare Pumpe handeln. Der Volumenstrom kann direkt oder indirekt durch eine Druckregelung eingestellt werden.

Besonders günstig ist die Volumenstromeinstellung dann, wenn die Arbeitsfläche des Walzenmantels die Randzone zumindest weitgehend axial überlappt. Zum einen ergibt sich hierdurch eine sehr große nutzbare Breite der Arbeitsfläche. Zum andern wird der durch Temperaturerhöhung gefährdete Randbereich der Arbeitsfläche an der Innenseite relativ großflächig durch das kühlere Randöl beeinflußt.

Wenn sich Arbeitsöl und Randöl vermischen dürfen, empfiehlt sich in weiterer Ausgestaltung der Erfindung ein Volumenstromteiler mit einem durch die Randzone verlaufenden Hauptkanal und einem Abzweigkanal, durch den ein Teil des Randöls in die Arbeitszone abgezweigt wird. Der abgezweigte Teil bewirkt eine Abkühlung des Arbeitsöls in der Nähe der Randzone und damit eine reduzierte Beheizung des Randbereichs der Arbeitsfläche. Dies ist insbesondere von Vorteil, wenn die Arbeitsfläche sich im wesentlichen nur über die Arbeitszone erstreckt oder wenn eine Bahn behandelt wird, deren Breite gleich oder kleiner ist als diejenige der Arbeitszone. Bei einer Änderung des Volumenstroms des Randöls ändert sich auch der Volumenstrom des abgezweigten Teils. Die Änderung der Einstellung wirkt sich daher auch auf die Enden der Arbeitszone aus.

Vielfach ist es zu empfehlen, daß sich im Hauptkanal hinter der Abzweigstelle eine Drosselstelle befindet. Diese Drosselstelle bestimmt wesentlich den Drosselwiderstand des Hauptkanals.

Mit Vorteil ist der Volumenstromteiler mit der Zuleitung für das Randöl verbunden. Da das Randöl hier den höchsten Druck hat, wird entsprechend viel Randöl abgezweigt. Außerdem hat dieses Randöl die geringste Temperatur. Die Beeinflussung des benachbarten Bereichs der Arbeitszone ist daher am größten.

Ferner kann die Dichtvorrichtung eine Gleitringdichtung aufweisen, an deren Innenseite ein Strömungskanal für das Randöl verläuft. Auf diese Weise wird die Gleitringdichtung, die sich infolge Reibung erwärmt, gekühlt, so daß sie eine längere Lebensdauer hat.

Des weiteren sollte dafür gesorgt sein, daß die Dichtvorrichtung eine Gleitringdichtung aufweist, deren Dichtring durch den Randöldruck gegen sein feststehendes Widerlager gedrückt ist. Hierdurch ist sichergestellt, daß die Gleitringdichtung auch bei höheren Drücken, wie sie bei der Einstellung von größeren Volumenströmen auftreten können, noch sicher dichtet.

Bei einer anderen Ausgestaltung weist die Dichtvorrichtung das Gehäuse eines den Walzenmantel treibenden Getriebes auf und das Randöl wird über das Gehäuse zu- oder abgeführt.

Die Erfindung wird nachstehend anhand der in der Zeichnung dargestellter bevorzugter Ausführungsbeispiele näher erläutert. Es zeigen:
- Fig. 1: einen Längsschnitt durch eine erfindungsgemäße Walze in einem Kalander mit zugehörigem Schaltbild,
- Fig. 2: eine vergrößerte Darstellung der Randzone der Walze der Fig. 1,
- Fig. 3: ein Blockschaltbild der Randölverteilung,
- Fig. 4: einen Längsschnitt durch die Randzone einer abgewandelten Ausführungsform,
- Fig. 5: einen Schnitt längs der Linie V-V in Fig. 4,
- Fig. 6: einen Schnitt längs der Linie VI-VI in Fig. 4,
- Fig. 7: einen Schnitt durch eine Randzone einer dritten Ausführungsform,
- Fig. 8: einen Schnitt durch die Randzone einer vierten Ausführungsform,
- Fig. 9: einen Schnitt durch die Randzone einer fünften Ausführungsform und
- Fig. 10: einen Teillängsschnitt durch eine Walze der Fig. 8 in Verbindung mit einem Getriebegehäuse.

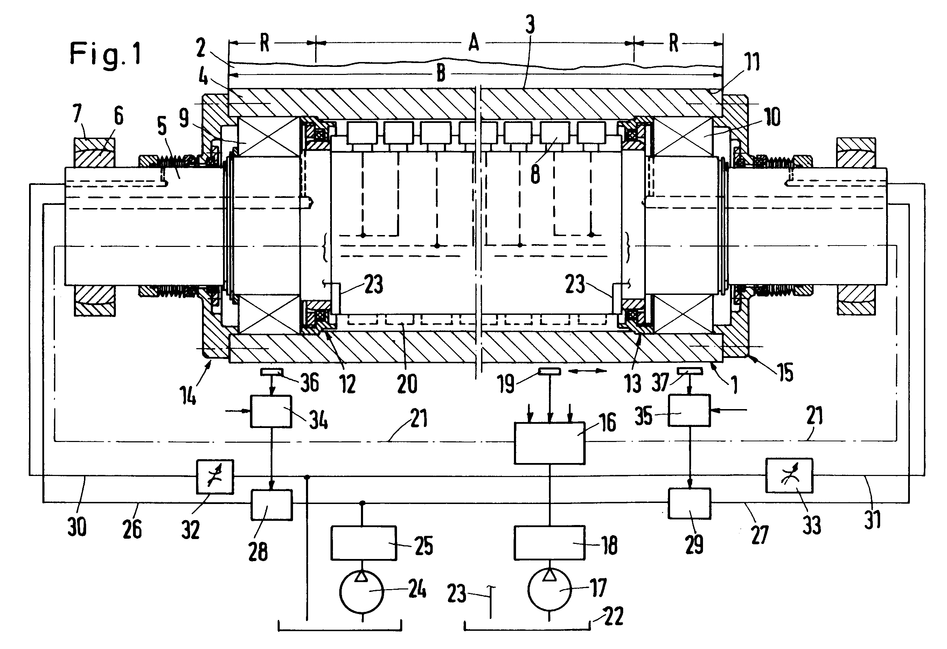

In Fig. 1 ist eine durchbiegungssteuerbare und beheizbare Walze 1 veranschaulicht, die in einem Kalander mit einer Gegenwalze 2 zusammenwirkt, um im Walzenspalt 3 ein Bahnmaterial aus Papier, Kunststoff, Textilien u.dgl. unter Zufuhr von Druck- und Wärmeenergie zu verformen. Die Walze 1 weist einen Walzenmantel 4 auf, der von einem Träger 5 durchsetzt ist, welcher in sphärischen Lagern 6 eines Ständers 7 drehfest gehalten ist. In einer Arbeitszone A wird der Hauptabschnitt des Walzenmantels 4 durch druckbelastbare Stützelemente 8 auf dem Träger 5 abgestützt. In den beiden Randzonen R sind die Walzenmantelenden mit Hilfe von Wälzlagern 9 und 10 auf dem Träger 5 gelagert.

Die Arbeitsfläche 11 des Walzenmantels 3 überlappt die Wälzlager 9 und 10 axial. Die Arbeitsbreite B der Arbeitsfläche 11 überdeckt daher die gesamten Randzonen R. Zwischen den Randzonen R und der Arbeitszone A ist eine ringförmige Trennvorrichtung 12 bzw. 13 angeordnet. Zwischen der Randzone R und der Atmosphäre ist eine ringförmige Dichtvorrichtung 14 bzw. 15 vorgesehen.

Die Stützelemente 8 werden zonenweise von einer Regeleinrichtung 16 mit Arbeitsöl versorgt, das von einer Pumpe 17 gefördert und in einer Heizvorrichtung 18 beheizt worden ist. Der Regeleinrichtung 16 werden, wie dies durch Pfeile angedeutet ist, Soll- und Istwerte von Bahndaten, Druckdaten, Temperaturdaten o.dgl. zugeführt, in Abhängigkeit von denen der den einzelnen Stützelementen 8 zuzuführenden Druck des Arbeitsöls eingestellt wird. Lediglich als Beispiel ist ein Temperaturfühler 19 veranschaulicht, der längs der Oberfläche des Walzenmantels 4 axial hinund herbewegt werden kann, um das Istprofil der Temperatur zu erfassen. Solche Regelungen sind üblich, wie DE-PS 31 31 799 belegt. Man kann auch gleichzeitig Druck und Temperatur regeln, wie es DE-PS 35 16 635 lehrt, wobei zusätzliche Stützelemente 20 auf der den Stützelementen 8 gegenüberliegenden Seite vorgesehen sind. Zu den einzelnen Stützelementen führen vereinfacht dargestellte Zuleitungen 21, zum Tank 22 führen Leitungen 23 zurück.

Randöl für die Randzonen R wird mittels einer Pumpe 24 über eine Kühlvorrichtung 25 zugeführt. In den Zulaufleitungen 26 bzw. 27 befinden sich Einstellvorrichtungen 28 bzw. 29 in der Form von Ventilen. In der Rücklaufleitung 30 bzw. 31 sind Einstellvorrichtungen 32 bzw. 33 in der Form von einstellbaren Drosseln vorgesehen. Die Ventile werden durch Regeleinrichtungen 34 bzw. 35 betätigt, denen ein Temperatursollwert vorgegeben ist und denen mit Hilfe eines Temperaturfühlers 36 bzw. 37 ein Temperatur-Istwert der Walzenmantelenden zugeführt wird. Mit Hilfe dieser Einstellvorrichtungen wird der Volumenstrom des Randöls geändert.

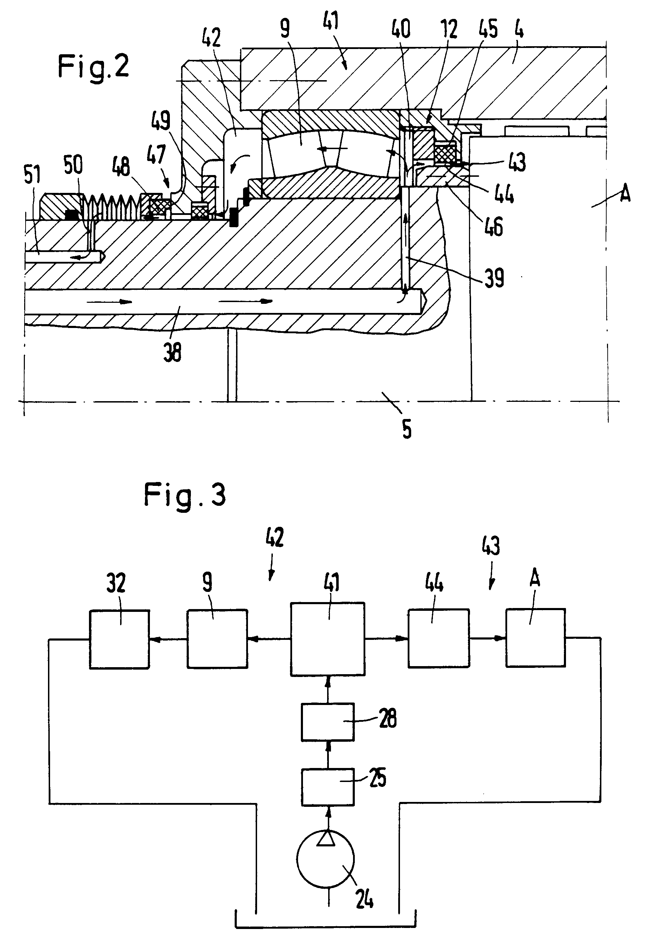

Der Aufbau der Walze im Bereich der Randzone R wird anhand der Fig. 2 näher erläutert. Da die Walze spiegelsymmetrisch aufgebaut ist, genügt die Erläuterung des linken Endes. Eine Axialbohrung 38 und eine Radialbohrung 39 verbinden die Zulaufleitung 26 mit einem Verteilerraum 40, der den Eingang zu einem Volumenstromteiler 41 bildet. Dieser Volumenstromteiler besitzt einen Hauptkanal 42 und einen Abzweigkanal 43, der einen definierten Durchtrittsspalt 44 zwischen einem äußeren Ring 45 und einem inneren Ring 46 der Trennvorrichtung 12 aufweist. Das zufließende Randöl teilt sich daher in Abhängigkeit von den Drosselwiderständen von Hauptkanal und Abzweigkanal in einen Hauptstrom und einen Abzweigstrom auf.

Der Abzweigstrom gelangt in den Endbereich der Arbeitszone A und vermischt sich dort mit dem Arbeitsöl, so daß dessen Temperatur und damit auch dessen Heizwirkung sinkt. Der Hauptstrom geht über das Wälzlager 9, wobei er das Ende des Walzenmantels kühlt, wenn die äußere Wärmeabfuhr zu gering ist.

Der Hauptkanal 42 ist zur Atmosphäre hin durch eine Gleitringdichtung 47 abgedichtet und bildet einen an deren Innenseite gelegenen Strömungskanal. Die durch Gleitreibung entstehende Wärme wird daher kontinuierlich abgeführt. Der Gleitring 48 wird durch den Druck des Randöls gegen die feststehende Widerlagerfläche 49 gedrückt. Je höher der Druck des Randöls, umso höher ist auch die Anpreßkraft, so daß eine dauerhafte Dichtung gewährleistet ist. Der Hauptstrom des Randöls gelangt dann über eine Radialbohrung 50 und eine Axialbohrung 51 zur Rücklaufleitung 30.

In Fig. 3 ist nochmal veranschaulicht, wie das Randöl von der Pumpe 24 über die Kühlvorrichtung 25 und die geregelte Einstellvorrichtung 28 zum Volumenstromteiler 41 fließt. Der Abzweigstrom geht über die feste Drossel des definierten Durchtrittspalt 44 und die Arbeitszone A zum Behälter. Und der Hauptstrom geht über das Wälzlager 9 und die Einstellvorrichtung 32, einer einstellbaren Drossel zum Behälter. Mit der Einstellvorrichtung 28 wird der gesamte Volumenstrom und mit der einstellbaren Drossel 32 der Hauptstrom beeinflußt. Man kann daher sowohl den Hauptstrom als auch den Abzweigstrom nach Wunsch einstellen.

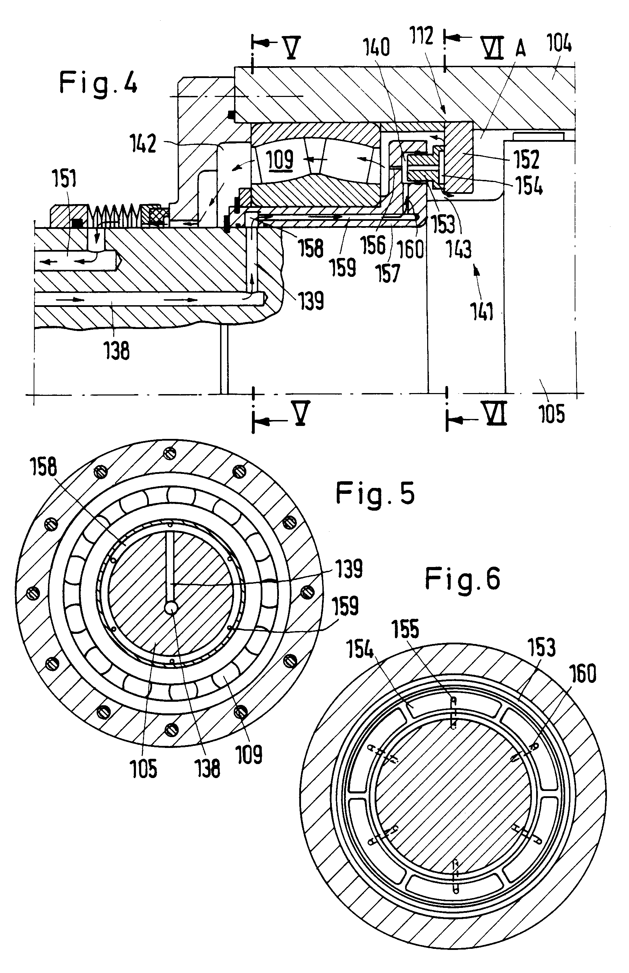

Bei der Ausführungsform der Fig. 4 bis 6 werden für entsprechende Teile mit 100 beginnende Bezugszeichen verwendet. Die Trennvorrichtung 112 weist einen am Walzenmantel 104 befestigten Ring 152 auf, der mit einem drehfest angeordneten Ring 153 zusammenwirkt. Dieser besitzt hydrostatische Lagertaschen 154 und wird durch den Randöldruck im Verteilerraum 140 belastet, der in üblicher Weise über Drosselbohrungen 155 mit den Taschen 154 verbunden ist und über eine weitere Drosselbohrung 156 mit dem Wälzlager 109 in Verbindung steht. Der Verteilerraum 140 wird mit Hilfe eines Einsatzes 157 gebildet, der mittels einer Ringnut 158 mit der Radialbohrung 139 in Verbindung steht. Von der Ringnut gehen Axialbohrungen 159 und von diesen Radialbohrungen 160 aus, welche die Verbindung zum Verteilerraum 140 herstellen.

Auch diese Konstruktion ergibt einen Volumenstromteiler 141, bei dem der Abzweigstrom durch die aus den Lagertaschen 154 in die Arbeitszone A austretende Randölmenge gebildet wird. Der Hauptstrom fließt über den Hauptkanal 142 und die Axialbohrung 151 ab. Der Ring 153 läßt eine Axialverschiebung, z.B. infolge Temperaturdehnungen, zu.

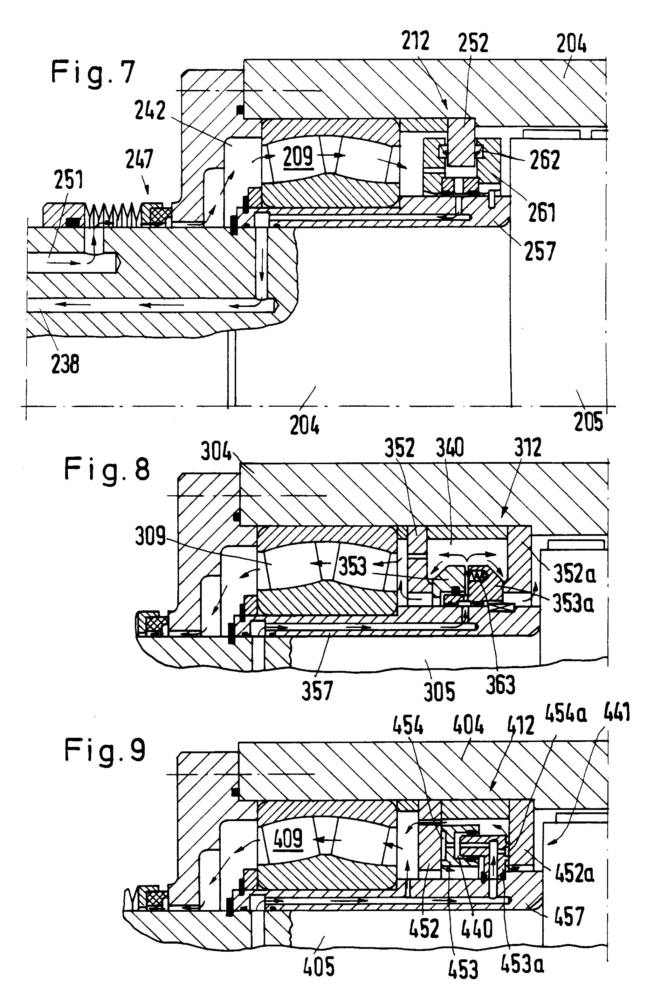

Bei der Ausführungsform nach Fig. 7 werden für entsprechende Teile mit 200 beginnende Bezugszeichen benutzt. Diese Konstruktion arbeitet ohne Volumenstromteiler, so daß es lediglich den Hauptkanal 242, aber keinen Abzweigkanal gibt. Unterschiedlich ist ferner, daß das Randöl über die Axialbohrung 251 zugeführt und über die Axialbohrung 238 abgeführt wird. Die Randzone wird also axial von außen nach innen durchströmt. Das Randöl strömt hierbei unmittelbar nach seinem Eintritt an der Gleitringdichtung 247 entlang. Diese wird daher besonders intensiv gekühlt. Die Trennvorrichtung 212 weist einen Rang 252 auf, der von einem im Querschnitt U-förmigen, dreiteiligen Gehäuse 261 mit eingesetzten Dichtungen 262 umfaßt ist. Das Gehäuse 261 ist auf einem Einsatz 257 axial verschiebbar, um Dehnungsunterschiede zwischen Walzenmantel 204 und Träger 205 auszugleichen.

Bei der Ausführungsform der Fig. 8 werden für entsprechende Teile mit 300 beginnende Bezugszeichen verwendet. Hier weist die Trennvorrichtung 312 zwei mit dem Walzenmantel 304 umlaufende Ringe 352 und 352a auf, welche mit zwei durch eine Federanordnung 363 und den im Verteilerraum 340 herrschenden Druck axial auseinandergedrückte Gleitringe 353 und 353a angeordnet sind. Diese Gleitringe sind axial auf dem Einsatz 357 verschiebbar gehalten, um Längendehnungsunterschiede auszugleichen.

In der Ausführungsform der Fig. 9 beginnen die Bezugszeichen für entsprechende Teile mit 400. Hier weist die Trennvorrichtung 412 zwei mit dem Walzenmantel 404 umlaufende Ringe 452 und 452a auf. Zwei Ringe 453 und 453a, jeweils mit hydrostatischen Lagertaschen 454 und 454a sind derart ineinandergesteckt, daß sie durch den Druck im Verteilerraum 440 gegen die zugehörigen Ringe 452 bzw. 452a gedrückt werden.

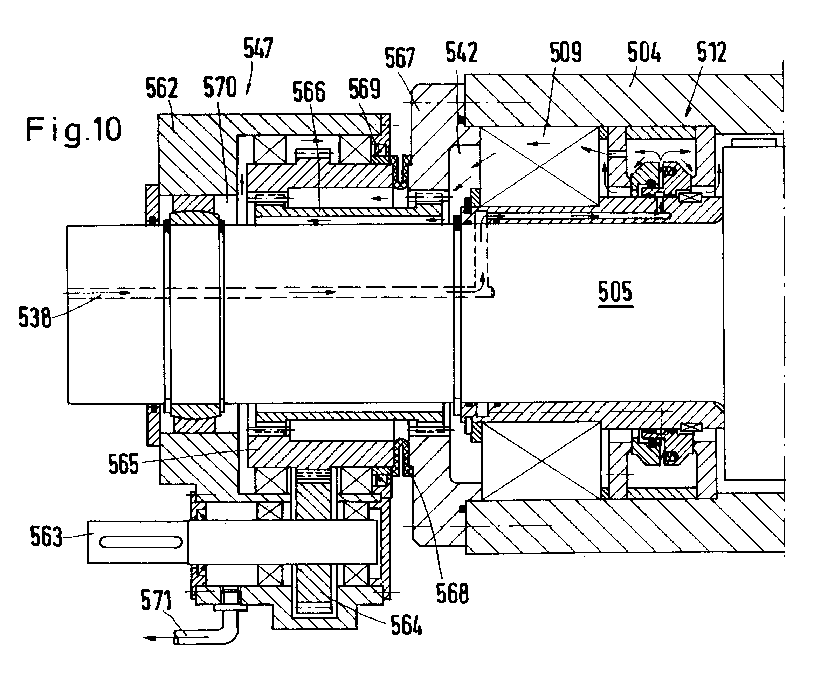

Gemäß Fig. 10 werden für entsprechende Teile mit 500 beginnende Bezugszeichen benutzt. Die Trenneinrichtung 512 entspricht der Trenneinrichtung 312 der Fig. 8, kann aber auch jede andere der beschriebenen Formen oder eine äquivalente Ausgestaltung haben. Der Träger 505 ist im Gehäuse 562 eines Getriebes gelagert, das zur Dichtvorrichtung 547 gehört. Eine Antriebswelle 563 treibt über ein Ritzel 564 ein außenverzahntes Zahnrad 565, das über eine Zahnkupplung 566 mit dem Flansch 567 des Walzenmantels 504 in Eingriff steht. Eine elastische Dichtung 568 zwischen Zahnrad 565 und Flansch 567 sowie eine Lippendichtung 569 o.dgl. zwischen Gehäuse 562 und Zahnrad 565 dichten den Innenraum 570 des Gehäuses nach außen hin ab. Am unteren Ende des Gehäuses ist ein Abfluß 571 vorgesehen. Das über die Axialbohrung 538 zugeführte Randöl dient daher nicht nur der einstellbaren Kühlung des Walzenmantelendes und der Schmierung des Wälzlagers 509, sondern auch der Schmierung des Getriebes.

Von den veranschaulichten Ausführungsbeispielen kann in vielfacher Hinsicht abgewichen werden, ohne den Grundgedanken der Erfindung zu verlassen. Beispielsweise brauchen die Wälzlager 9 nicht fest auf dem Träger 5 gelagert zu sein. Sie können auch auf einer Buchse montiert sein, die radial zum Träger 5 verschiebbar ist, wie dies als Alternative aus DE-PS 36 04 839 bekannt ist. Die Arbeitsbreite B des Walzenmantels 4 kann auch kürzer sein und sich lediglich über die Arbeitszone A erstrecken. Die Stützelemente können jede beliebige Form haben, beispielsweise auch die Form von teilringförmigen Kammern, wie dies aus DE-PS 31 28 140 bekannt ist; bei Verwendung des Volumenstromteilers muß allerdings der Druck in der Randzone über derjenigen in der Arbeitszone liegen. Man kann auch mit einer festen Drossel in der Rücklaufleitung arbeiten; diese kann auch als Drosselbohrung o.dgl. in der Walze untergebracht sein. Die Temperaturfühler 36 und 37 können auch entfallen, wenn der Verschiebeweg des Temperaturfühlers 19 bis zu den Walzenmantelenden reicht.

Die Wälzlager können auch an Buchsen angreifen, die stirnseitig an dem Walzenmantel angesetzt sind, und dabei zwischen der Buchseninnenseite und dem Träger angeordnet sein, wie es EP-A1-179 730 zeigt, oder zwischen der Buchsenaußenseite und dem Maschinengestell vorgesehen sein.

## Patentansprüche

1. Durchbiegungssteuerbare und beheizbare Walze für Kalander u.dgl., mit einem Walzenmantel (4), einem ihn durchsetzenden, drehfest gehaltenen Träger (5), in einer Arbeitszone (A) angeordneten, druckbelastbaren Stützelementen (8) zum Lagern des Hauptabschnitts des Walzenmantels (4) auf dem Träger (5), in zwei Randzonen (R) angeordneten Wälzlagern (9, 10) zum Lagern der Walzenmantelenden, ringförmigen Trennvorrichtungen (112, 412) zwischen Arbeitszone (A) und Randzonen (R) sowie ringförmigen Dichtvorrichtungen (47; 247; 547) zwischen Randzone (R) und Atmosphäre, wobei ein erstes Druckmittelsystem Arbeitsöl mit einer höheren Temperatur den Stützelementen (8) und gegebenenfalls weiteren Abgabestellen in der Arbeitszone (A) zuführt und ein zweites Druckmittelsystem Randöl mit einer geringeren Temperatur durch die Randzone strömen läßt, gekennzeichnet durch eine Einstellvorrichtung (28, 29, 32, 33) zur Änderung des Volumenstroms des Randöls, durch einen Volumenstromteiler (41; 141) mit einem durch die Randzone (R) verlaufenden Hauptkanal (42; 142) und einem Abzweigkanal (43; 143), durch den ein Teil des Randöls in die Arbeitszone (A) abgezweigt wird, und durch Trennvorrichtungen (112; 412), die einen Ring (153; 453, 453a) aufweisen, der von einer zumindest teilweise durch den Randöldruck erzeugten Kraft gegen einen Gegenring (152; 452, 452a) gedrückt ist und in seiner Stirnfläche mit Randöl versorgte hydrostatische Taschen (154; 454, 454a) aufweist, wobei der Abzweigkanal (143) des Volumenstromteilers (41; 441) über die hydrostatischen Taschen und den sich im Betrieb bildenden Spalt zwischen Ring und Gegenring verläuft.

2. Walze nach Anspruch 1, dadurch gekennzeichnet, daß dem Walzenmantel (4) im Bereich der Randzone (R) ein Temperaturfühler (36, 37) zugeordnet ist und die Einstellvorrichtung (28, 29) in Abhängigkeit von der gemessenen Temperatur verstellbar ist.

3. Walze nach Anspruch 1 oder 2, dadurch gekennzeichnet, daß die Einstellvorrichtung (28, 29) ein in die Zulaufleitung (26, 27) des Randöls geschaltetes Ventil ist.

4. Walze nach Anspruch 1 oder 2, dadurch gekennzeichnet, daß die Einstellvorrichtung (32, 33) eine in die Ablaufleitung (30, 31) des Randöls geschaltete Drosselvorrichtung ist.

5. Walze nach einem der Ansprüche 1 bis 4, dadurch gekennzeichnet, daß die Arbeitsfläche (11) des Walzenmantels (4) die Randzone (R) zumindest weitgehend axial überlappt.

6. Walze nach einem der Ansprüche 1 bis 5, dadurch gekennzeichnet, daß sich im Hauptkanal (42) hinter der Abzweigstelle eine Drosselstelle (32, 33) befindet.

7. Walze nach einem der Ansprüche 1 bis 6, dadurch gekennzeichnet, daß der Volumenstromteiler (41) mit der Zuleitung (26) für das Randöl verbunden ist.

8. Walze nach einem der Ansprüche 1 bis 7, dadurch gekennzeichnet, daß die Dichtvorrichtung (14) eine Gleitringdichtung (47; 247) aufweist, an deren Innenseite ein Strömungskanal für das Randöl verläuft.

9. Walze nach einem der Ansprüche 1 bis 8, dadurch gekennzeichnet, daß die Dichtvorrichtung (14) eine Gleitringdichtung (47) aufweist, deren Dichtring (48) durch den Randöldruck gegen sein feststehendes Widerlager (49) gedrückt ist.

10. Walze nach einem der Ansprüche 1 bis 7, dadurch gekennzeichnet, daß die Dichtvorrichtung (547) das Gehäuse (562) eines den Walzenmantel (504) treibenden Getriebes aufweist und das Randöl über das Gehäuse zu- oder abgeführt wird.

## Claims

1. Heatable controlled deflection roll for calenders and the like, comprising a roll shell (4), a non-rotatably mounted carrier (5) traversing the latter, supporting elements (8) loadable in compression and arranged in a working zone (A) for supporting the main portion of the roll shell (4) on the carrier (5), roller bearings (9, 10) arranged in two edge zones (R) for supporting the roll shell ends, annular separating devices (112, 412) between the working zone (A) and the edge zones (R) and annular sealing devices (47; 247; 547) between the edge zone (R) and the atmosphere, a first pressure medium system supplying working oil at an elevated temperature to the supporting elements (8) and optionally to further delivery points in the working zone (A) and a second pressure medium system allowing edge oil at a lower temperature to flow through the edge zone, characterised by an adjusting device (28, 29, 32, 33) for altering the flow rate of the edge oil, by a flow divider (41; 141) with a main conduit (42; 142) extending through the edge zone (R) and a branch conduit (43; 143) by means of which some of the edge oil is branched off into the working zone (A), and by separating devices (112; 412) having a ring (153; 453, 453a) urged against a mating ring (152; 452, 452a) by a force produced at least partially by the edge oil pressure and provided in its end face with hydrostatic pockets (154; 454, 454a) supplied with edge oil, the branch conduit (143) of the flow divider (41; 441) extending via the hydrostatic pockets and the gap formed between the ring and the mating ring during operation.

2. Roll according to claim 1, characterised in that a temperature sensor (36, 37) is associated with the roll shell (4) in the region of the edge zone (R) and the adjusting device (28, 29) can be adjusted as a function of the measured temperature.

3. Roll according to claim 1 or claim 2, characterised in that the adjusting device (28, 29) is a valve installed in the supply line (26, 27) for the edge oil.

4. Roll according to claim 1 or claim 2, characterised in that the adjusting device (32, 33) is a restrictor device installed in the discharge line (30, 31) for the edge oil.

5. Roll according to one of claims 1 to 4, characterised in that the working surface (11) of the roll shell (4) overlaps the edge zone (R) at least substantially axially.

6. Roll according to one of claims 1 to 5, characterised in that a restrictor (32, 33) is situated in the main conduit (42) behind the branch-off point.

7. Roll according to one of claims 1 to 6, characterised in that the flow divider (41) is connected to the supply line (26) for the edge oil.

8. Roll according to one of claims 1 to 7, characterised in that the sealing device (14) has a face seal (47; 247) along the inner face of which a flow channel for the edge oil extends.

9. Roll according to one of claims 1 to 8, characterised in that the sealing device (14) has a face seal (47), the sealing ring (48) of which is urged against its fixed support (49) by the edge oil pressure.

10. Roll according to one of claims 1 to 7, characterised in that the sealing device (547) comprises the housing (562) of a gear unit driving the roll shell (504) and the edge oil is supplied or discharged via the housing.

## Revendications

1. Rouleau chauffant à flexion commandée pour calandres et analogues, comprenant une enveloppe formant rouleau (4), un support (5) qui la traverse et qui y est solidarisé en rotation, des éléments d'appui (8) qui sont disposés dans une zone de travail (A) et peuvent être sollicités en pression pour supporter le segment principal de l'enveloppe formant rouleau (4) montée sur le support (5), des paliers à rouleaux (9, 10) disposés dans deux zones de bord (R) pour supporter les extrémités de l'enveloppe formant rouleau, des dispositifs annulaires de séparation (112, 412) disposés entre la zone de travail (A) et les zones de bord (R) ainsi que des dispositifs annulaires d'étanchéité (47 ; 247 ; 547) disposés entre la zone de bord (R) et l'atmosphère, un premier système d'agent de pression fournissant de l'huile de travail à une température assez élevée aux éléments d'appui (8) et le cas échéant à d'autres points de desserte de la zone de travail (A), et un second système d'agent de pression faisant circuler de l'huile de bord à une température assez basse à travers la zone de bord, caractérisé par un dispositif de réglage (28, 29, 32, 33) pour faire varier le débit de l'huile de bord, par un répartiteur de débit (41 ; 141) comprenant un canal principal (42 ; 142), qui traverse la zone de bord (R), et un canal de dérivation (43 ; 143), par lequel une partie de l'huile de bord est dérivée vers la zone de travail (A), et par des dispositifs de séparation (112 ; 412) comportant un anneau (153 ; 453) qui est appliqué contre un contre-anneau (152 ; 452, 452a) par une force produite au moins en partie par la pression de l'huile de bord et dont la face frontale comporte des cavités hydrostatiques (154 ; 454, 454a) alimentées en huile de bord, le canal de dérivation (143) du répartiteur de débit (41 ; 441) passant par les cavités hydrostatiques et par l'interstice qui, lors du fonctionnement, se forme entre l'anneau et le contre-anneau.

2. Rouleau selon la revendication 1, caractérisé en ce qu'une sonde pyrométrique (36, 37) est associée à l'enveloppe formant rouleau (4) dans la zone de bord (R), et le dispositif de réglage (28, 29) peut être réglé en fonction de la température mesurée.

3. Rouleau selon la revendication 1 ou 2, caractérisé en ce que le dispositif de réglage (28, 29) est une valve implantée sur la conduite d'alimentation (26, 27) en huile de bord.

4. Rouleau selon la revendication 1 ou 2, caractérisé en ce que le dispositif de réglage (32, 33) est un dispositif d'étranglement implanté sur la conduite d'évacuation (30, 31) de l'huile de bord.

5. Rouleau selon l'une des revendications 1 à 4, caractérisé en ce que la surface de travail (11) de l'enveloppe formant rouleau (4) recouvre axialement au moins la majeure partie de la zone de bord (R).

6. Rouleau selon l'une des revendications 1 à 5, caractérisé en ce qu'un point d'étranglement (32, 33) se trouve dans le canal principal (42) derrière le point de dérivation.

7. Rouleau selon l'une des revendications 1 à 6, caractérisé en ce que le répartiteur de débit (41) est relié à la conduite d'alimentation (26) en huile de bord.

8. Rouleau selon l'une des revendications 1 à 7, caractérisé en ce que le dispositif d'étanchéité (14) comporte une garniture étanche à anneau glissant (47 ; 247), sur le côté intérieur de laquelle passe un canal de circulation de l'huile de bord.

9. Rouleau selon l'une des revendications 1 à 8, caractérisé en ce que le dispositif d'étanchéité (14) comporte une garniture étanche à anneau glissant (47) dont l'anneau d'étanchéité (48) est poussé contre sa butée fixe (49) par la pression de l'huile de bord.

10. Rouleau selon l'une des revendications 1 à 7, caractérisé en ce que le dispositif d'étanchéité (547) comprend le carter (562) d'un mécanisme entraînant l'enveloppe formant rouleau (504), et l'huile de bord est alimentée ou évacuée à travers le carter.
